# EUROPEAN PATENT APPLICATION

(11) **EP 2 001 246 A2**
(43) Date of publication of application: **10.12.2008**
(21) Application number: 07739711.5
(22) Date of filing: 26.03.2007
(51) Int. Cl.: H04Q 7/22, H04L 12/56, H04Q 7/28, H04Q 7/36, H04Q 7/38

(54) **BASE STATION, ROUTE CONTROL DEVICE, AND HANDOVER CONTROL METHOD**

(30) Priority: 28.03.2006 JP 2006089424
(71) Applicant: NTT DoCoMo, Inc., Chiyoda-ku Tokyo 100-6150 (JP)
(72) Inventor: MOTEGI, Masayuki, Chiyoda-ku, Tokyo 100-6150 (JP); KATO, Yasuhiro, Chiyoda-ku, Tokyo 100-6150 (JP); HAPSARI, Wuri Andarmawanti, Chiyoda-ku, Tokyo 100-6150 (JP); NAKAMURA, Takehiro, Chiyoda-ku, Tokyo 100-6150 (JP)
(74) Representative: HOFFMANN EITLE
(86) International application number: PCT/JP2007/056273
(87) International publication number: WO 2007/116701

(57) **Abstract**

A path control apparatus includes a sequence number assignment unit assigning successive sequence numbers to respective user data packets transmitted from an upper layer; and a transmission unit transmitting the user data packets with the assigned sequence numbers to a handover source base station or a handover target base station. A base station includes a sequence correction unit sorting at least one of a user data packet transmitted from a path control apparatus and a user data packet transferred from a handover source base station in a correct order in accordance with sequence numbers successively assigned to respective user data packets; and a transfer unit transferring one or more user data packets of the user data packets having the assigned sequence numbers, wherein the handover source base station has not transmitted the one or more user data packets or waits for transmission acknowledgement for the one or more user data packets.

## Description

### TECHNICAL FIELD

The present invention relates to sequence control techniques for transmitted data in handover of a mobile station between two base stations coupled to a path control apparatus, and more particularly relates to a base station, a path control apparatus and a handover control method for controlling the sequences of transmitted data and path switched data.

### BACKGROUND ART

In IMT-2000 systems, a mobile station or user equipment (UE) conducts handover (relocation) between Node Bs coupled to two RNCs (Radio Network Controllers) connected to each other controlled by a common SGSN (Serving GPRS Support Node).

In this case, lossless handover is fulfilled in a sublayer of layer 2, for example, in PDCP (Packet Data Convergence Protocol). To this end, the protocol condition, such as the sequence number in the PDCP, of a handover target RNC is synchronized with the mobile station, and then unreceived PDCP PDUs (Protocol Data Units) are transferred from a handover source RNC to the handover target RNC.

At this time, the handover target RNC does not request the SGSN to establish a downlink U plane until PDCP PDUs stored in the handover source RNC have been transferred to the handover target RNC.

### DISCLOSURE OF INVENTION

### [PROBLEM TO BE SOLVED BY THE INVENTION]

However, the above-mentioned background art has some problems as presented below.

In IMT-2000 systems, at the start of relocation, a relocation start message is transmitted from a handover source RNC to a SGSN by means of RANAP (Radio Access Network Application Part), which triggers disconnecting a path to the handover source RNC.

After handover has been completed for a mobile station, a PDCP PDU is transferred from the handover source RNC to the handover target RNC. After completion of the transfer, the handover target RNC transmits a relocation completion command to the SGSN. This triggers establishing a U plane to the handover target RNC, resulting in longer interruption time in the handover.

Meanwhile, in systems where user data packets are transferred between base stations, if switching of a transfer path is not carried out in an access gateway until the user data packets have been transferred to a handover target base station as in the IMT-2000 systems, higher performance may be achieved in LTE systems than the IMT-2000 systems, and thus there is a possibility of a large amount of user data packets being accumulated in the handover source base station.

That may increase the interruption time considerably and adversely affect performance of upper layers.

Also, if the transfer path is switched in the access gateway during the transferring of the user data packets in order to avoid the increase in the interruption time and the degradation of the performance of the upper layers, the user data packets transmitted from the access gateway to the handover target base station via the handover source base station are mixed in the handover target base station with the user data packets transmitted from the access gateway to the handover target base station after the path switching, which may make it difficult or impossible to identify the transfer sequence. That may degrade characteristics of the upper layers such as TCP (Transmission Control Protocol).

The present invention addresses the above-mentioned problems. One object of the present invention is to provide a base station, a path control apparatus and a handover control method where the consecutiveness of sequence numbers for transferred data is maintained and the data can be sorted in a handover target base station in a correct sequence.

### [MEANS FOR SOLVING THE PROBLEM]

In order to eliminate the above-mentioned problem, one feature of the present invention relates to a base station, comprising a sequence correction unit sorting at least one of a user data packet transmitted from a path control apparatus and a user data packet transferred from a handover source base station in a correct order in accordance with sequence numbers successively assigned to respective user data packets; and a transfer unit transferring one or more user data packets of the user data packets having the assigned sequence numbers, wherein the handover source base station has not transmitted the one or more user data packets or waits for transmission acknowledgement for the one or more user data packets.

According to this arrangement, the handover target base station can use the sequence numbers successively assigned in the path control apparatus to correct the order of the user data packets.

Another feature of the present invention relates to a path control apparatus, comprising a sequence number assignment unit assigning successive sequence numbers to respective user data packets transmitted from an upper layer; and a transmission unit transmitting the user data packets with the assigned sequence numbers to a handover source base station or a handover target base station.

According to this arrangement, it is possible to assign successive sequence numbers to the respective user data packets and include information indicative of the sequence numbers in the user data packets.

Another feature of the present invention relates to a handover control method, comprising the steps of a path control apparatus assigning successive sequence numbers to respective user data packets transmitted from an upper layer; the path control apparatus transmitting the user data packets with the assigned sequence numbers to a handover source base station or a handover target base station; and the handover source base station sorting at least one of a user data packet transmitted from the path control apparatus and a user data packet transferred from the handover source base station in a correct order in accordance with the sequence numbers successively assigned to the respective user data packets.

According to this feature, the path control apparatus can assign successive sequence numbers to respective user data packets and includes information indicative of the sequence numbers in the user data packets. The handover target base station can use the sequence numbers to sort a user data packet transferred from the path control apparatus to the handover target base station via the handover source base station and a user data packet transmitted from the path control apparatus after path switching in a correct order.

### [ADVANTAGE OF THE INVENTION]

According to the embodiments of the present invention, a base station, a path control apparatus and a handover control method are achieved for enabling the consecutiveness of sequence numbers for transferred data to be maintained and sorting the data in a handover target base station in a correct sequence.

### BRIEF DESCRIPTION OF DRAWINGS

FIG. 1 is a schematic diagram illustrating a radio access network according to one embodiment of the present invention;
FIG. 2 is a block diagram illustrating an access gateway according to one embodiment of the present invention;
FIG. 3 is a block diagram illustrating a base station according to one embodiment of the present invention;
FIG. 4 is a schematic diagram illustrating an exemplary FP data frame;
FIG. 5 is a flow diagram illustrating an operation of an access gateway according to one embodiment of the present invention;
FIG. 6 is a flow diagram illustrating an operation of a base station according to one embodiment of the present invention;
FIG. 7 is a flow diagram illustrating an operation of a base station according to one embodiment of the present invention;
FIG. 8 is a flow diagram illustrating an operation of a base station according to one embodiment of the present invention;
FIG. 9 is a schematic diagram illustrating an operation of a base station according to one embodiment of the present invention;
FIG. 10 is a schematic diagram illustrating an exemplary transferred data frame;
FIG. 11 is a flow diagram illustrating an operation of a base station according to one embodiment of the present invention;
FIG. 12 is a flow diagram illustrating an operation of a base station according to one embodiment of the present invention; and
FIG. 13 is a flow diagram illustrating an operation of a base station according to one embodiment of the present invention.

### LIST OF REFERENCE SYMBOLS

- 100:: radio access network
- 200:: core network
- 300,: 300₁, 300₂, 300₃: access gateway (aGW)
- 400,: 400₁, 400₂, 400₃: base station or eNode B (eNB)
- 500:: mobile station or user equipment (UE)

### BEST MODE FOR CARRYING OUT THE INVENTION

Hereinafter, embodiments of the present invention will be described with reference to the drawings. Throughout all the drawings for explanation of the embodiments, the same reference signs are designated for the same functions, and duplicated descriptions thereof are omitted.

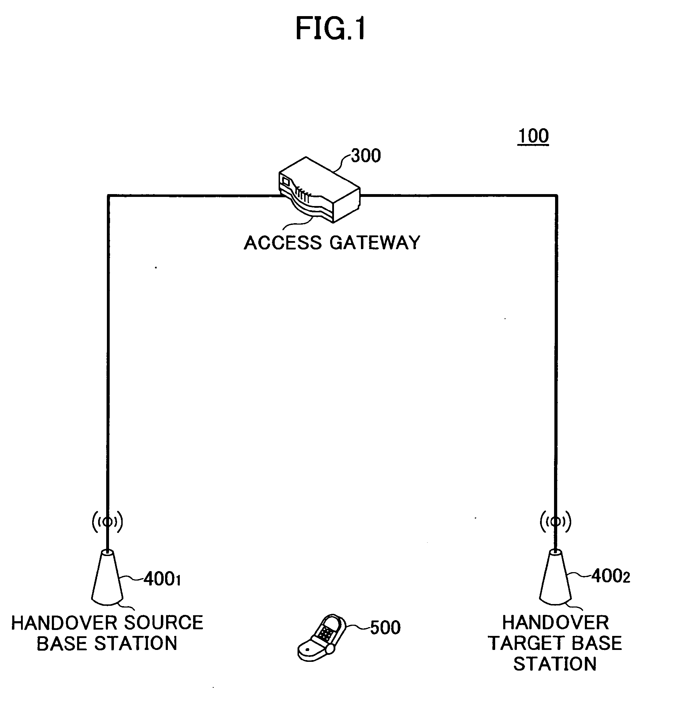

A radio access network according to one embodiment of the present invention is described with reference to FIG. 1.

In this embodiment, a radio access network (RAN) 100 includes an access gateway (ACGW) 300 serving as a path control apparatus, base stations 400 coupled to and serving under the access gateway 300, such as base stations 400₁ and 400₂, and a mobile station 500. The access gateway 300 may include a mobility management entity (MME) and/or a system architecture evolution (SAE) gateway, for example. In the radio access network 100 of the present embodiment, it is supposed that the base station 400₁ serves as a handover source base station and the base station 400₂ serves as a handover target base station.

In the description of the present embodiment, the radio access network is focused on. However, commonly used radio communication systems may include various components, such as a core network (CN), other than the radio access network 100.

Also, in the present embodiment, the two base stations 400₁ and 400₂ are coupled to each other via the access gateway 300, but the present invention is not limited to it. For example, the two base stations 400₁ and 400₂ may be coupled to each other by means of a relay apparatus, such as a router or a switch, serving under the access gateway 300.

In order to transfer user data between the access gateway 300 and the base stations 400, data frames are used to transfer user data packets, and a protocol for configuring the data frames, for example, frame protocol (FP), is terminated.

As one example of the protocol terminated between the access gateway 300 and the base stations 400, the FP is applied to the present embodiment, but the present invention is not limited to it. For example, protocols other than the FP, for example, GPRS tunneling protocol (GTP), may be applied.

In the present embodiment, data packets are transferred to the handover target base station 400₂ in the same data frame format as the FP applied between the access gateway 300 and the base stations 400. Also, if the above-mentioned GTP is applied, the data packets may be transferred to the handover target base station 400₂ in the same data frame as the GTP.

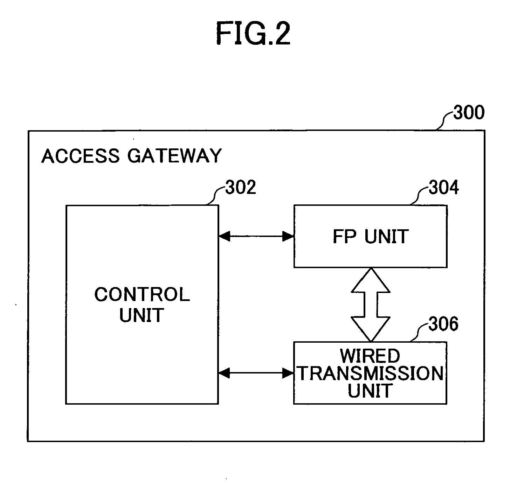

Next, the access gateway 300 according to one embodiment of the present invention is described with reference to FIG. 2.

In this embodiment, the access gateway 300 includes a control unit 302, a FP unit 302 coupled to the control unit 302 and serving as a sequence number assignment unit for user data packets, and a wired transmission unit 306. The FP unit 304 and the wired transmission unit 306 exchange data with each other.

The control unit 302 controls functional entities in the access gateway 300.

The wired transmission unit 306 transfers FP data frames to the base stations 400. For example, the wired transmission unit 306 may transfer data frames transmitted from the handover source base station 400₁ to the handover target base station 400₂.

For data units resulting from some operations specific to the radio access network, such as concealment processing and header compression for security, performed on user data packets received from a core network via the wired transmission unit 306, the FP unit 304 assigns sequence numbers to the associated data frames. For example, for PDCP protocol data units (PDUs) resulting from some operations specific to the radio access network performed on IP datagrams received from a core network via the wired transmission unit 306, the FP unit 304 assigns successive sequence numbers to the associated FP data frames and includes information indicative of the sequence numbers in the relevant user data packets. Also, if the above-mentioned GTP is applied, the FP unit 304 may assign successive sequence numbers to GTP PDUs and include information indicative of the sequence numbers in the relevant user data packets.

Herein, the PDCP PDUs have a one-to-one correspondence to the FP data frames. In other words, a single frame protocol data frame corresponds to a single PDCP PDU. However, the present invention is not limited to it, and a single FP data frame may be configured to include multiple PDUs as in HS-DSCH (High Speed-Downlink Shared Channel) FP. Also, if the above-mentioned GTP is applied, an IP packet may have a one-to-one correspondence to a single GTP PDU. Alternatively, a single GTP PDU may be configured to include multiple IP packets.

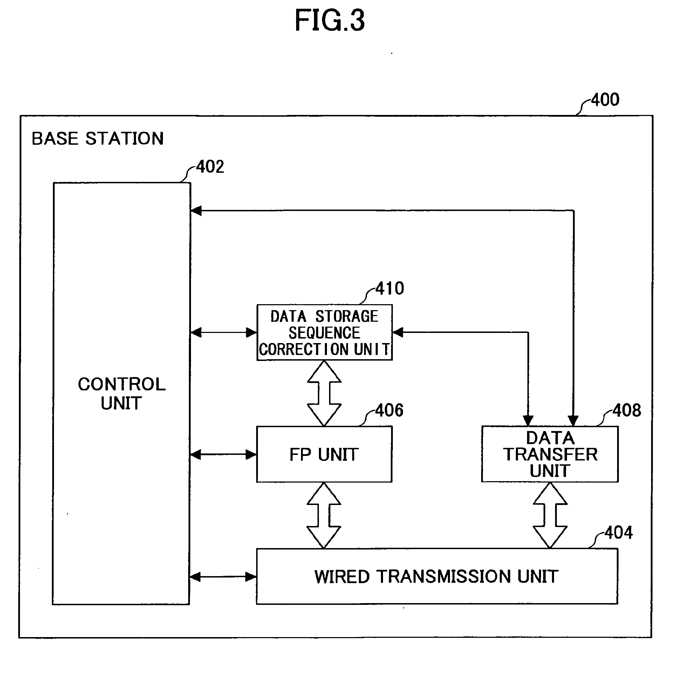

Next, the base station 400 according to one embodiment of the present invention is described with reference to FIG. 3.

In this embodiment, the base station 400 includes a control unit 402, a data storage sequence correction unit 410 coupled to the control unit 402 and serving as both a data storage unit and a sequence correction unit, a wired transmission unit 404, a data transfer unit 408 serving as a transfer unit, and a FP unit 406. The FP unit 406 exchanges data with the data storage sequence correction unit 410 and the wired transmission unit 404. The data transfer unit 408 exchanges data with the wired transmission unit 404.

The control unit 402 controls functional entities in the base station 400. For example, the control unit 402 activates a handover procedure, whereby the mobile station 500 initiates handover.

The wired transmission unit 404 supplies FP data frames transferred from the access gateway 300 to the FP unit 406. Also, the wired transmission unit 404 transfers data frames, such as FP data frames, transferred from the data transfer unit 408 to a handover target base station 400. As a result, the data frames may be transferred to the handover target base station 400 via the access gateway 300.

The FP unit 406 stores FP data frames in the data storage sequence correction unit 410. For example, the FP unit 406 stores FP data frames transferred from the access gateway 300 in the data storage sequence correction unit 410. The data transfer unit 408 supplies data frames transferred from the handover source base station 400₁ in the data storage sequence correction unit 410. Also, the data transfer unit 408 transfers untransmitted FP data frames and/or transmission acknowledgement waiting FP data frames in the data storage sequence correction unit 410 to the handover target base station 400₂. As a result, the untransmitted and/or transmission acknowledgement waiting FP data frames in the data storage sequence correction unit 410 can be transferred to the handover target base station 400₂ via the wired transmission unit 404. The data storage sequence correction unit 410 sorts the FP data frames transferred from the FP unit 406 and the data frames supplied from the data transfer unit 408 and transferred from the handover source base station 400₁ in a predefined sequence of the FP data frames, for example, in the order of the sequence numbers, and stores the sorted data therein. For example, the data storage sequence correction unit 410 refers to the successively assigned sequence numbers stored in the individual user data packets and stores them in accordance with the sequence numbers.

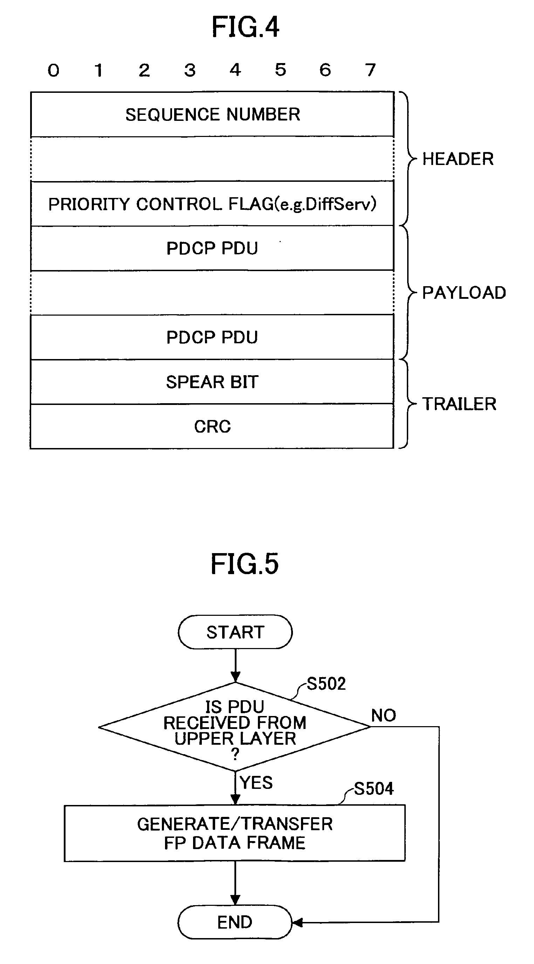

Next, a FP data frame according to one embodiment of the present invention is described with reference to FIG. 4.

In this embodiment, the FP data frame includes a header part, a payload part and a trailer part.

The header part at least includes a sequence number. In addition to the sequence number, the base station 400 may assign to the header part priority information for identifying the priority of user data and/or spear bits for future extension of some functions. For example, the header part may include a priority control flag such as SAE Radio Bearer Type.

The payload part includes at least one PDCP PDU.

The trailer part includes a cyclic redundancy check (CRC) for checking an error in the FP data frame. Also, the trailer part may be assigned spear bits for future extension of some functions.

The above-mentioned configuration of the data frame of the present embodiment is simply one example, and the present invention is not limited to it. An exemplary transferred frame of the present embodiment is described. If the above-mentioned GTP is applied, the header part includes at least a sequence number. In addition to the sequence number, the base station 400 may include TE-ID for identifying a bearer in the header part. The header part may be configured to be extendable. The payload part includes at least one IP packet.

The FP unit 406 in the handover source base station 400₁ stores FP data frames transferred from the access gateway 300 in the data storage sequence correction unit 410 and transfers the same data frames as the FP data frames to the handover target base station 400₂ in handover operations. As a result, the FP data frames are transferred to the handover target base station 400₂ via the data transfer unit 408 and the wired transmission unit 404. In this case, the transferred data frame has the same configuration as the FP data frame. Also, if the above-mentioned GTP is applied, the handover source base station may store GTP PDUs transferred from the access gateway 300 and transfer the same data frame as the GTP PDU to the handover target base station 400₂ in handover.

Next, an operation of the access gateway 300 according to one embodiment of the present invention is described with reference to FIG. 5.

At step S502, the FP unit 304 in the access gateway 300 determines whether the access gateway 300 has received a PDU (Protocol Data Unit) from an upper layer such as PDCP.

If the FP unit 304 determines that the access gateway 300 has not received the PDU from the upper layer (S502: NO), the operation ends.

On the other hand, if the FP unit 304 determines that the access gateway 300 has received the PDU from the upper layer (S502: YES), the FP unit 304 assigns successive sequence numbers to individual PDUs, generates FP data frames including information indicative of the sequence numbers and transfers the generated FP data frames to the base station 400. As a result, the FP data frames may be transferred to the base station 400 via the wired transmission unit 306. For example, the FP unit 304 may transfer the FP data frames to the handover source base station 400₁ before path switching and transfer the FP data frames to the handover target base station 400₂ after the path switching. Also, if the above-mentioned GTP is applied, the FP unit 304 may assign successive sequence numbers to individual user data packets, generate GTP PDUs including information indicative of the sequence numbers and transfer the generated GTP PDUs to the base station 400. In the above embodiment, the FP data frame is generated for each PDU, but the present invention is not limited to it.

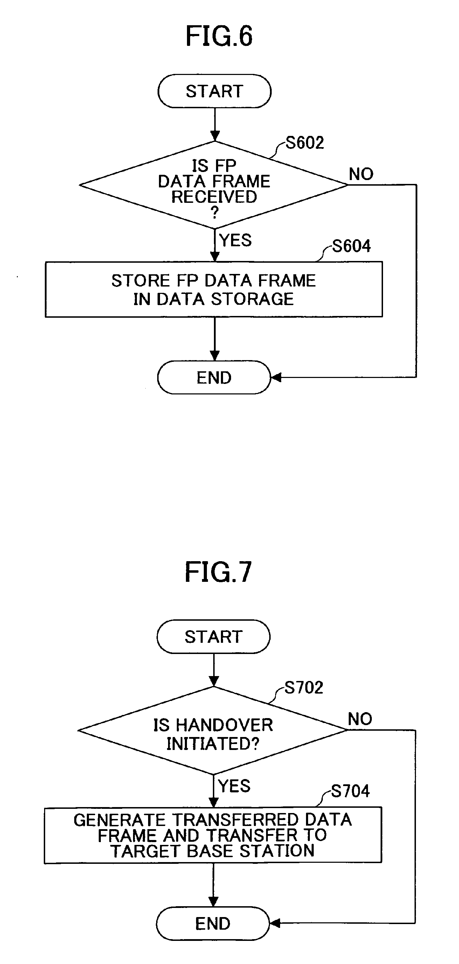

Next, operations of the base station 400 according to one embodiment of the present invention are described with reference to FIGS. 6-8.

Here, respective operations of a handover source base station and a handover target base station are separately described below.

Exemplary operations of the handover source base station are described with reference to FIGS. 6 and 7.

At step S602, the FP unit 406 in the base station 400 determines whether the base station 400 has received a FP data frame.

If the FP unit 406 determines that the base station 400 has not received the FP data frame (S602: NO), the operation ends.

On the other hand, if the FP unit 406 determines that the base station 400 has received the FP data frame (S602: YES), at step S604, the FP unit 406 stores the received FP data frame in the data storage sequence correction unit 410. Next, an exemplary operation of the handover source base station 400 in initiated handover is described with reference to FIG. 7.

At step S702, the control unit 402 determines whether a handover procedure has been activated.

If the control unit 402 determines that the handover procedure has not been activated (S702: NO), the operation ends.

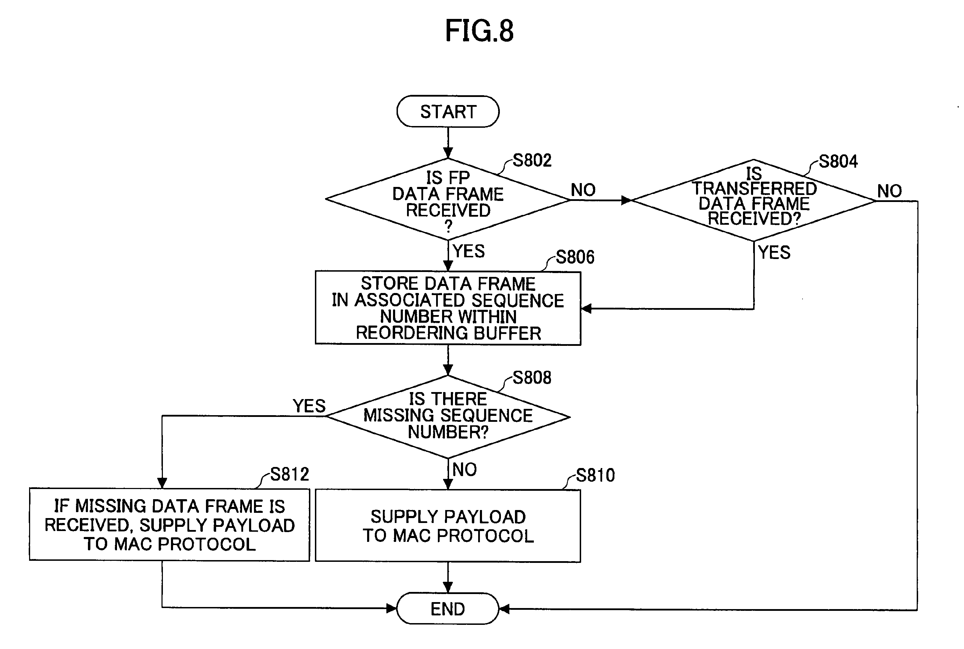

On the other hand, if the control unit 402 determines that the handover procedure has been activated (S702: YES), at step S704, the data transfer unit 408 transfers untransmitted FP data frames and transmission acknowledgement waiting FP data frames in the data storage sequence correction unit 410 to the handover target base station 400₂. Next, an exemplary operation of the handover target base station 400₂ is described with reference to FIG. 8.

At step S802, the FP unit 406 in the base station 400₂ determines whether the base station 400₂ has received a FP data frame. For example, the FP unit 406 in the base station 400₂ may determine whether the base station 400₂ has received the FP data frame from the access gateway 300.

If the FP unit 406 determines that the base station 400₂ has not received the FP data frame (S802: NO), at step S804, the data transfer unit 408 determines whether the base station 400₂ has received a data frame (FP data frame) transferred from the handover source base station 400₁.

If the data transfer unit 408 determines that the base station 400₂ has not received the data frame transferred from the handover source base station 400₁ (S804: NO), the operation ends.

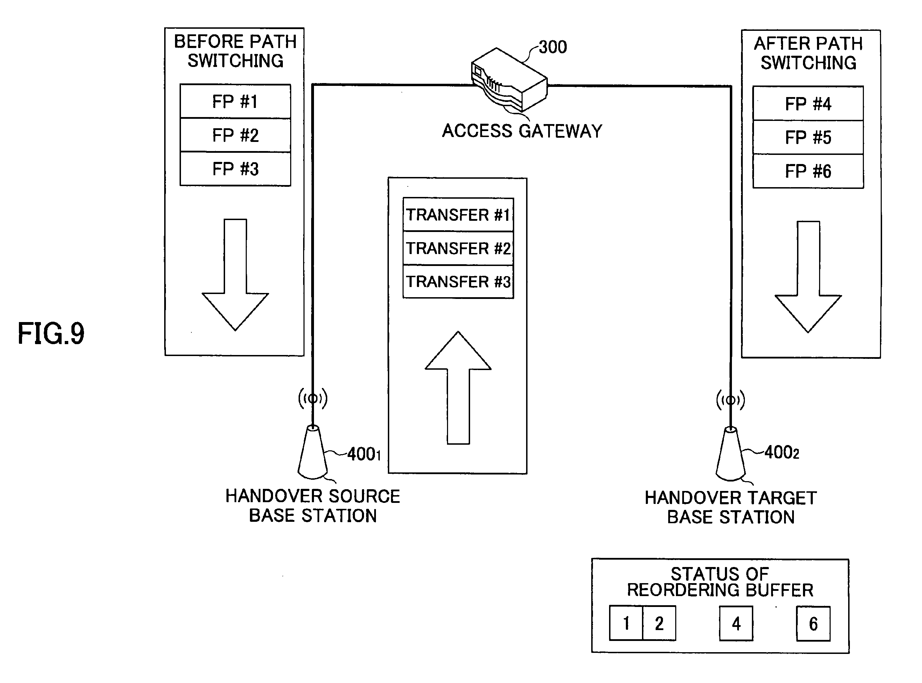

On the other hand, if it is determined that the base station 400₂ has received the FP data frame (S802: YES) or if it is determined that the transferred data frame has been received (S804: YES), for the FP data frame supplied from the FP unit 406 and the transferred data frame supplied from the data transfer unit 408, at step S806, the data storage sequence correction unit 410 includes a FP data frame in the same sequence number portion as the information indicative of the sequence number in the FP data frame. The data storage sequence correction unit 410 includes a buffer assigned a sequence number in advance (reordering buffer). As one example, exemplary transmission by the access gateway 300 of FP data frames #1-#3 to the handover source base station 400₁ before path switching and of FP data frames #4-#6 to the handover target base station 400₂ after the path switching is described with reference to FIG. 9.

In the transmission, the handover source base station 400₁ transfers the FP data frames #1-#3 as transferred data frames to the handover target base station 400₂ via the access gateway 300.

The FP data frames transmitted by the access gateway 300 after the path switching and the FP data frames transmitted by the handover source base station 400₁ before the path switching are stored in a reordering buffer in the data storage sequence correction unit 410 in the handover target base station 400₂.

At step S808, the data storage sequence correction unit 410 determines whether data frames transferred from the handover source base station 400₁ or the stored FP data frames have arrived at the base station 400₂ in a correct order.

If the data storage sequence correction unit 410 determines that the transferred data frames have arrived in the correct order (S808: NO), at step S810, the data storage sequence correction unit 410 transfers the sorted user data to the associated protocol such as MAC (Media Access Control).

On the other hand, if the data storage sequence correction unit 410 determines that the transferred data frames have not arrived in the correct order (S808: YES), at step S812, the data storage sequence correction unit 410 stores the FP data frames or the transferred data frames until the data frames have been sorted in the correct order, and once the user data have been sorted in the correct order, the data storage sequence correction unit 410 transfers the user data to the associated protocol such as the MAC.

Among the FP data frames #1-#3 transferred from the handover source base station 400₁ and the FP data frames #4-#6 transmitted from the access gateway 300, as illustrated in FIG. 9, the FP data frames #1 and #2 and the FP data frames #4 and #6 are stored in the reordering buffer in the handover target base station 400₂. In this case, the data storage sequence correction unit 410 stores the FP data frames or the transferred data frames until the data frames have been sorted in a correct order. Once the data frames have been sorted in the correct order, the data storage sequence correction unit 410 transfers the FP data frames to the associated protocol such as the MAC.

Some exemplary reasons for the sequence numbers of the FP data frames or the transferred data frames being not in the correct order may be that reversal between the FP data frames and the transferred data frames has occurred in the transmission path and/or that the FP data frames and/or the transferred data frames have been discarded in the transmission path.

If the FP data frames or the transferred data frames have been discarded, the data frames have not arrived for a waiting period and thus cannot be sorted in the correct order. To this end, the data storage sequence correction unit 410 may wait for a predetermined time period and transfer the FP data frames to the associated protocol upon passage of the time period. For example, the data storage sequence correction unit 410 may activate a timer and transfer the FP data frames to the associated protocol upon expiration of the timer.

A radio access network according to another embodiment of the present invention is described.

The radio access network of this embodiment has the same configuration as the radio access network described with reference to FIG. 1. However, the radio access networks differ from each other in terms of the respective protocols, and this difference is described below.

User data packets are transferred in data frames between the access gateway 300 and the base station 400. A protocol for configuring the data frames such as FP is terminated.

In the present embodiment, the FP is applied as one example of the protocol terminated between the access gateway 300 and the base station 400, but the present invention is not limited to it. Some protocols other than the FP, for example, the GTP may be applied.

User data packets are transferred from the handover source base station 400₁ to the handover target base station 400₂ by using a protocol, such as the MAC, terminated between the base stations 400, and transferred data frames are configured for transferring from the handover source base station 400₁ to the handover target base station 400₂.

In the present embodiment, the MAC protocol is applied as one example of the protocol for data transferring, but the present invention is not limited to it. A protocol layer for transferring may be used for termination between the base stations, and user data packets may be transferred.

In other words, in the present embodiment, a protocol different from the protocol for termination between the access gateway 300 and the base station 400 is used for termination between the handover source base station 400₁ and the handover target base station 400₂.

The access gateway 300 of the present embodiment has the same configuration as the access gateway described with reference to FIG. 2, and thus the description thereof is omitted.

The base stations of the present embodiment have the same configuration as the base stations described with reference to FIG. 3, but the respective functional entities may have different functions.

The control unit 402 controls functional entities in the base station 400. For example, the control unit 402 may activate a handover procedure.

The wired transmission unit 404 transfers FP data frames transferred from the access gateway 300 to the FP unit 406. Also, the wired transmission unit 404 transfers data frames transferred from the data transfer unit 408, such as FP data frames, to the handover target base station 400₂. As a result, the transferred data frames can be transferred to the handover target base station 400₂ via the access gateway 300.

The FP unit 406 stores user data packets in the data storage sequence correction unit 410 while maintaining association of the user data packets with the sequence numbers in the FP data frames.

The data transfer unit 408 stores the data frames transferred from the handover source base station 400₁ in the data storage sequence correction unit 410. Also, the data transfer unit 408 generates data frames for transferring untransmitted user data packets and transmission acknowledgement waiting user data packets in the data storage sequence correction unit 410 to the handover target base station 400₂ while maintaining the association of the user data packets with the sequence numbers in the FP data frames. For example, the data transfer unit 408 may generate the transferred data frames while maintaining the consecutiveness of the sequence numbers. The data storage sequence correction unit 410 sorts the FP data frames transferred from the FP unit 406 and the data frames transferred from the data transfer unit 408. For example, the data storage sequence correction unit 410 may sort the FP data frames in the order of the sequence numbers in the FP data frames and store the FP data frames and the transferred data frames. Next, an exemplary FP data frame according to one embodiment of the present invention is described.

The FP data frame has the same configuration as the FP data frame described with reference to FIG. 4, and the description thereof is omitted.

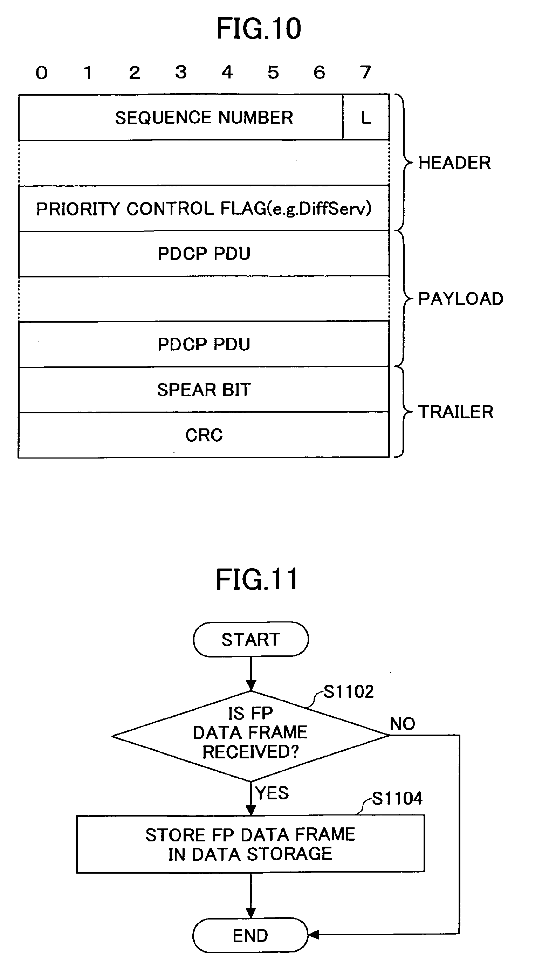

Next, an exemplary transferred data frame according to one embodiment of the present invention is described with reference to FIG. 10.

The transferred data frame may have the same data frame format as the FP data frame or a data frame format different from the FP data frame.

The transferred data frame is configured to maintain correspondence between the sequence numbers assigned to the FP data frames and the user data packets (PDCP PDUs).

The transferred data frame includes a header part, a payload part and a trailer part.

The header part at least includes a sequence number assigned for the FP data frame. Also, the header part may include priority information for the transferred data frame in order to prevent loss of the transferred data frame. Also, the header part may include a version flag and/or a spear bit, taking into account extendability.

The payload part includes a user data packet associated with the sequence number in the header part.

The trailer part may include a CRC for checking an error in the transferred data frame. Also, the trailer part may include spear bits for extendability.

The above-mentioned configuration of the transferred data frame is one example, and the present invention is not limited to it.

The access gateway 300 according to this embodiment has the same operations as the access gateway 300 of the above-mentioned embodiments, and thus the description thereof is omitted.

Next, an exemplary operation of the base station 400 according to one embodiment of the present invention is described.

An exemplary operation of the handover source base station 400₁ and an exemplary operation of the handover target base station 400₂ are separately described below.

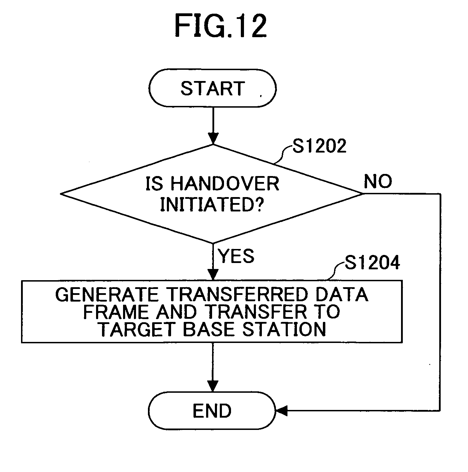

The operation of the handover source base station 400₁ is described with reference to FIGS. 11 and 12.

At step S1102, the FP unit 406 in the base station 400₁ determines whether the base station 400₁ has received a FP data frame.

If the FP unit 406 determines that the base station 400₁ has not received the FP data frame (S1102: NO), the operation ends.

On the other hand, if the FP unit 406 determines that the base station 400₁ has received the FP data frame (S1102: YES), at step S1104, the FP unit 406 stores user data packets in the data storage sequence correction unit 410 while maintaining the association of the successively assigned sequence numbers in the received FP data frames with the user data packets in the FP data frames. Next, an exemplary operation of the handover source base station 400₁ in initiated handover is described with reference to FIG. 12.

At step S1202, the control unit 402 determines whether a handover procedure is activated.

If the handover procedure is not activated (S1202: NO), the operation ends.

On the other hand, if the handover procedure is activated (S1202: YES), at step S1204, the data transfer unit 408 transfers untransmitted and transmission acknowledgement waiting user data packets in the data storage sequence correction unit 410 to the handover target base station 400₂. For example, the data transfer unit 408 may generate and transfer data frames.

In the present embodiment, the data transfer unit 408 includes sequence numbers assigned for the FP data frames in the transferred data frames.

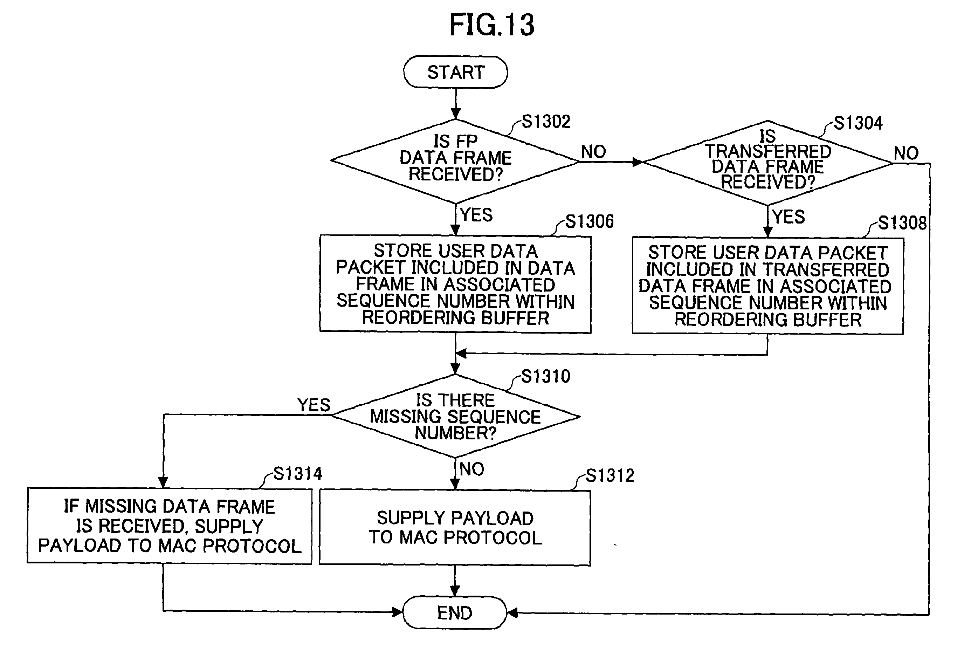

Next, an exemplary operation of the handover target base station 400₂ is described with reference to FIG. 13.

At step S1302, the FP unit 406 in the base station 400₂ determines whether the base station 400₂ has received a FP data frame transmitted from the access gateway 300.

If the FP unit 406 determines that the base station 400₂ has not received the FP data frame (S1302: NO), at step S1304, the FP unit 406 determines whether the base station 400₂ has received a data frame transferred from the handover source base station 400₁.

If the FP unit 406 determines that the base station 400₂ has not received the data frame transferred from the handover source base station 400₁ (S1304: NO), the operation ends.

On the other hand, if the FP unit 406 determines that the base station 400₂ has received the FP data frame transmitted from the access gateway 300 (S1302: YES), at step S1306, the data storage sequence correction unit 410 includes a user data packet in the FP data frame at the portion of the same sequence number as the sequence number in the FP data frame.

Also, if the FP unit 406 determines that the base station 400₂ has received the data frame transferred from the handover source base station 400₁ (S1304: YES), at step S1308, the data storage sequence correction unit 410 includes a user data packet in the transferred data frame at the portion of the same sequence number as the sequence number in the transferred data frame. The data storage sequence correction unit 410 includes a buffer (reordering buffer), and a sequence number is assigned to the buffer in advance. At step S1310, the data storage sequence correction unit 410 determines whether the stored user data packets are in a correct order.

If it is determined that the user data packets have arrived in the correct order (S1310: NO), at step S1312, the data storage sequence correction unit 410 transfers the user data packets to the associated protocol such as MAC. On the other hand, if it is determined that the user data packets are not in the correct order (S1310: YES), at step S1314, the data storage sequence correction unit 410 stores the user data packets until the user data packets have been sorted in the correct order, and once the user data packets have been sorted in the correct order, the data storage sequence correction unit 410 transfers the user data packets to the associated protocol such as the MAC.

Some exemplary reasons for the sequence numbers of the user data packets being not in the correct order may be that reversal between the FP data frames and the transferred data frames has occurred in the transmission path and/or that the FP data frames and/or the transferred data frames have been discarded in the transmission path.

If the FP data frames or the transferred data frames have been discarded, the data frames have not arrived within a waiting period and thus cannot be sorted in the correct order. To this end, the data storage sequence correction unit 410 may wait for a predetermined time period and transfer the FP data frames to the associated protocol upon passage of the time period. For example, the data storage sequence correction unit 410 may activate a timer and transfer the user data packets to the associated protocol upon expiration of the timer.

As mentioned above, according to the embodiment of the present invention, an access gateway assigns successive sequence numbers to data frames transferred from the access gateway to a base station. The base station manages the consecutiveness of the sequence numbers and user data packets in association with the sequence numbers, which makes it possible to maintain the consecutiveness of the sequence numbers in data transferred from a handover source base station to a handover target base station. Thereby, it is possible to sort the user data packets in a correct order in the handover target base station.

In addition, the possibility of sorting the user data packets in the correct order in the handover target base station can alleviate characteristic degradation of upper layers.

This international patent application is based on Japanese Priority Application No. 2006-089424 filed on March 28, 2006, the entire contents of which are hereby incorporated by reference.

### [Industrial Applicability]

A base station, a path control apparatus and a handover control method according to the present invention can be applied to radio communication systems.

## Claims

1. A base station, comprising:
a sequence correction unit sorting at least one of a user data packet transmitted from a path control apparatus and a user data packet transferred from a handover source base station in a correct order in accordance with sequence numbers successively assigned to the respective user data packets; and
a transfer unit transferring one or more of the user data packets having the assigned sequence numbers,
wherein the handover source base station has not transmitted the one or more user data packets or waits for transmission acknowledgement for the one or more user data packets.

2. The base station as claimed in claim 1, wherein the sequence numbers are provided to individual data units in a frame protocol defined between the base station and the path control apparatus.

3. The base station as claimed in claim 2, wherein the transfer unit transfers the user data packets to a handover target base station in the same data frame format as the frame protocol defined between the base station and the path control apparatus.

4. The base station as claimed in claim 1, wherein the sequence numbers are provided to individual data units in a GTP-u defined between the base station and the path control apparatus.

5. The base station as claimed in claim 4, wherein the transfer unit transfers the user data packets to a handover target base station in the same data frame format as the GTP-u defined between the base station and the path control apparatus.

6. The base station as claimed in claim 1, wherein the transfer unit applies a protocol between the base station and a handover target base station, the protocol being different from a protocol applied between the base station and the path control apparatus, generates a user data packet based on the different protocol, and transfers the user data packet to the handover target base station.

7. A path control apparatus, comprising:
a sequence number assignment unit assigning successive sequence numbers to respective user data packets transmitted from an upper layer; and
a transmission unit transmitting the user data packets with the assigned sequence numbers to a handover source base station or a handover target base station.

8. The path control apparatus as claimed in claim 7, wherein the sequence numbers are provided to individual data units in a frame protocol defined between the base station and the path control apparatus.

9. The path control apparatus as claimed in claim 7, wherein the sequence numbers are provided to individual data units in a GTP-u defined between the base station and the path control apparatus.

10. A handover control method, comprising the steps of:
a path control apparatus assigning successive sequence numbers to respective user data packets transmitted from an upper layer;
the path control apparatus transmitting the user data packets with the assigned sequence numbers to a handover source base station or a handover target base station; and
the handover source base station sorting at least one of a user data packet transmitted from the path control apparatus and a user data packet transferred from the handover source base station in a correct order in accordance with the sequence numbers successively assigned to the respective user data packets.

11. The handover control method as claimed in claim 10, further comprising the step of:
when a mobile station performs handover, the handover source base station transferring one or more user data packets of the user data packets transmitted from the path control apparatus to the handover target base station,
wherein the handover source base station has not transmitted the one or more user data packets or waits for transmission acknowledgement for the one or more user data packets.
